Europäisches Patentamt

European Patent Office

Office européen des brevets

(11) Veröffentlichungsnummer: **0 384 342 B1**

(12) **EUROPÄISCHE PATENTSCHRIFT**

(45) Veröffentlichungstag der Patentschrift: **18.11.93**

(21) Anmeldenummer: **90103126.0**

(22) Anmeldetag: **19.02.90**

(51) Int. Cl.⁵: **C04B 35/58**

(54) **Siliziumnitrid-Keramik und Verfahren zu ihrer Herstellung.**

(30) Priorität: **21.02.89 DE 3905271**

(43) Veröffentlichungstag der Anmeldung:
**29.08.90 Patentblatt 90/35**

(45) Bekanntmachung des Hinweises auf die
Patenterteilung:
**18.11.93 Patentblatt 93/46**

(84) Benannte Vertragsstaaten:
**DE FR GB SE**

(56) Entgegenhaltungen:
**EP-A- 0 185 224**
**EP-A- 0 219 885**
**EP-A- 0 227 471**

**Sprechsaal,Band 119, Nr.4,1986, Coburg;**
**G.Wötting et al. "Dichtes Siliciunnitrid.**
**Physikalisc-chemische Grundlagen, Herstel-**
**lung, Eigenschaften und Anwendung"**
**S.265-268, 270, 271.**

**SPRECHSAAL,Band 119,Nr.:7, 1986, Coburg;**
**"Dichtes Siliciumnitrid. I:Grundlagen, Her-**
**stellung,Eigenschaft und Anwendung" S.**
**555,556,558-561.**

(73) Patentinhaber: **HOECHST AKTIENGESELL-**
**SCHAFT**

**D-65926 Frankfurt(DE)**

(72) Erfinder: **Peuckert, Marcellus, Dr.**
**Platanenweg 8**
**D-6238 Hofheim am Taunus(DE)**
Erfinder: **Boberski, Cornelia, Dr.**
**Breckenheimer Strasse 32**
**D-6238 Hofheim am Taunus(DE)**

**Beschreibung**

Die Erfindung betrifft eine hochtemperaturfeste Siliziumnitrid-Keramik, die im wesentlichen aus den kristallinen Phasen $\beta$-Siliziumnitrid und stabilisiertem, kubischem Hafniumoxid sowie einer amorphen Glasphase besteht. Die Erfindung betrifft ferner ein Verfahren zur Herstellung dieser Keramik.

Die bei hohen Temperaturen stabile kubische Modifikation von Hafniumoxid wandelt sich bei tiefen Temperaturen wieder in die monokline Modifikation um, sofern sie nicht stabilisiert wird. Es ist bekannt, daß sich diese Stabilisierung an reinem $HfO_2$ durch 2- oder 3-wertige Kationen, z.B. Ionen der Erdalkalien oder der Seltenen Erden erreichen läßt (A.K. Kuznetsov et al. Russ. J. Inorg. Chem. (Engl. Transl.) 20, 425 (1975) und F.M. Spiridonov et al., Russ. J. Inorg. Chem. 14, 1332 (1969)).

Es ist auch bekannt, daß $Si_3N_4$-Keramik unter Verwendung von $Y_2O_3$ und $Al_2O_3$ in einer $N_2$-Atmosphäre gesintert werden kann (T. Hayashi et al., J. Mat. Sci. 21 (1986) 3501).

Aus der europäischen Anmeldung 0 227 471 sind Siliziumnitrid-Körper bekannt, die bis zu 10 Gew.-% Hafniumoxid und daneben bis zu 10 Gew.-% eines Oxids eines Elements der Seltenen Erden, z.B. Y oder Ce, als Sinterhilfsmittel enthalten. Es wird angegeben, daß höhere Zusätze an Oxiden dieser Seltenen Erden sich nachteilig auf die mechanische Stabilität und die thermische Schockbeständigkeit auswirken. Das Hafniumoxid soll in den eingesetzten Mengen von maximal 10 Gew.-% zu einem Glas mit hohem Schmelzpunkt führen.

Außerdem ist bekannt, daß der Zusatz von unstabilisiertem monoklinen sowie stabilisiertem $ZrO_2$, das in Form dispergierter einzelner Körner im gesinterten Gefüge vorliegt, die Festigkeit und Bruchzähigkeit der $Si_3N_4$-Keramik bei Raumtemperatur erhöht (DE-OS 27 51 938; F.F. Lange et al., J. Mat. Res. 2 (1987) 66). Die Festigkeitserhöhung beruht in diesem Fall auf einer Erhöhung der Bruchzähigkeit, die durch eine Umwandlungsverstärkung, d.h. die Modifikationsänderung des $ZrO_2$ von der tetragonalen in die monokline Modifikation erreicht wird. Dieser Verstärkungsmechanismus wirkt allerdings nur bei niedrigen Temperaturen unterhalb 1000°C. Außerdem reagiert das $ZrO_2$ im Gegensatz zu $HfO_2$ mit $Si_3N_4$ beim Sintern zu Zirkoniumnitrid und Zirkonoxinitrid. Daher lassen sich die Ergebnisse von $ZrO_2$ nicht einfach auf $HfO_2$ übertragen.

Da die mechanischen Festigkeiten der beschriebenen keramischen Körper noch nicht sehr hoch ist, bestand die Aufgabe, Siliziumnitrid-Körper mit verbesserter mechanischen Eigenschaften zu schaffen.

Die Erfindung beruht auf der Erkenntnis, daß die mechanischen Eigenschaften der Siliziumnitrid-Keramik günstig beeinflußt werden, wenn Hafniumoxid in Anteilen von 11 bis 70 Gew.-% und als kristallines kubisches $HfO_2$ vorliegt. Durch zugesetzte Oxide von Magnesium, Yttrium und/oder den Seltenen Erden (von Sm bis Yb) läßt sich die kubische Modifikation des Hafniumoxids stabilisieren.

Gegenstand der Erfindung ist daher eine hochtemperaturfeste, mehrphasige Keramik mit einem Anteil von mindestens 25 Gew.-% an kristallinem $\beta$-Siliziumnitrid und einer amorphen Glasphase, die dadurch gekennzeichnet ist, daß die Keramik von 11 bis 70 Gew.-% kristallines kubisches Hafniumoxid enthält und die Glasphase Silizium und mindestens eines der Elemente Magnesium, Yttrium und/oder der seltenen Erden (von Sm bis Yb) sowie gegebenenfalls Aluminium enthält.

Bei dieser Keramik tritt das vom Zirkonoxid her bekannte Problem der Reaktion mit Siliziumnitrid nicht auf. Die in früheren Veröffentlichungen (DE-OS 27 51 938) beschriebene Festigkeitserhöhung durch Umwandlungsverstärkung dispergierter Gefügekörner aus $ZrO_2$ bzw. $HfO_2$ bei der Umwandlung von der tetragonalen in die monokline Modifikation spielt bei der vorliegenden Keramik keine Rolle. Durch den Zusatz von Magnesium, Yttrium und/oder den Seltenen Erden in Form der Oxide oder Oxid-Vorläufer wird das beim Sintern gebildete kubische Hafniumoxid vollständig stabilisiert. Der Anteil der Glasphase an der neuen mehrphasigen Keramik beträgt maximal 10 Gew.-% und vorzugsweise weniger als 5 Gew.-%. Aluminium in der Glasphase trägt nicht zur Stabilisierung der kubischen Phase von $HfO_2$ bei.

Von dem Gefüge der Siliziumnitrid-Keramik gemäß EP-A2-227 471 mit Anteilen von bis zu 10 Gew.-% $HfO_2$ unterscheidet sich die neue Keramik auch durch ihr Gefüge, das auf den höheren Gehalt an Hafniumoxid und den zur Stabilisierung der Kubischen Modifikation des Hafniumoxids notwendigen größeren Gehalt von 5 - 20 Gew.-% eines Oxids der Elemente Mg, Y und/oder der Seltenen Erden (von Sm-Yb) zurückgeht. Nach Wegätzen der Glasphase erkennt man (an polierten Schliffen der Keramik unter dem Elektronenmikroskop), daß das Gefüge aus langgestreckten Nadeln ($\beta$-$Si_3N_4$) besteht, welche ineinander verfilzt sind und teilweise von einer zusammenhängenden Matrix aus Hafniumoxid zusammengehalten werden. Röntgenspektren zeigen, daß das Hafniumoxid kristallin in der kubisch stabilisierten Form vorliegt. Der mittlere Streckungsgrad der Siliziumnitridnadeln liegt bei 5 bis 10. Wahrscheinlich bewirkt das die $Si_3N_4$-Nadeln umschließende kristalline Hafniumoxid eine höhere Festigkeitals einzelne zwischen den Nadeln dispergierte Hafniumoxid-Körner. Da im vorliegenden Fall das Hafniumoxid in der kubischen Modifikation ausreichend stabilisiert ist, treten keine durch Modifikationsänderungen bedingte interne Spannungen im Gefüge auf. Der hohe Hafniumoxid- Gehalt unterstützt die Verdichtung beim Sintern. Da nach dem Sintern das Hafniumoxid vollständig kristallisiert ist, wird dadurch die Hochtemperaturfestigkeit nicht beeinträchtigt. Die als Sinteradditiv zugesetzten Oxide von Magnesium, Yttrium und/oder den seltenen Erden werden mindestens teilweise im Verlauf des Sinterns vom Hafniumoxid unter Mischkristallbildung aufgenommen (bis zu 10 Atom-%bezogen auf Hf ). Durch diesen Mechanismus wird der Anteil einer amorphen, intergranularen Glasphase erniedrigt, der für die Hochtemperaturfestigkeit nicht förderlich ist. Von den seltenen Erden werden nur die Elemente von Sm bis Yb benötigt. Besonders bevorzugt sind die seltenen Erden Dy, Ho, Er und Yb.

Wahrscheinlich besteht die gebildete Glasphase aus einem Oxynitridglas, das Silizium und mindestens eines der Elemente Yttrium, Magnesium und/oder der seltenen Erden (von Sm bis Yb) sowie gegebenenfalls Aluminium enthält.

Vorzugsweise enthält die neue mehrphasige Keramik 25 bis 85 Gew.-% $\beta$-Si$_3$N$_4$, 11 - 70 Gew.-% HfO$_2$ und 5 bis 20 Gew.-% der Elemente Magnesium, Yttrium, Aluminium und/oder der Seltenen Erden (jeweils gerechnet als Oxid).

Bevorzugte Anteile an Hafniumoxid sind 15 bis 70 Gew.-% und insbesondere 20 bis 70 Gew.-%. Besonders bevorzugt sind Keramiken mit 40 bis 70 Gew.-% $\beta$-Si$_3$N$_4$, 20 bis 40 Gew.-% HfO$_2$ und 5 bis 20 Gew.-% der Oxide der Sinterhilfselemente, insbesondere 50 bis 70 Gew.-% $\beta$-Si$_3$N$_4$, 20 bis 30 Gew.-% Hafniumoxid und 5 bis 20 Gew.-% der- Oxide der Sinterhilfselemente. Das Gewichtsverhältnis Hafniumoxid/Oxide der Sinterhilfselemente beträgt vorzugsweise 1:1 bis 3:1, insbesondere 2:1 bis 3:1.

Die beschriebene, hochtemperaturfeste verstärkte Keramik kann nach einem Verfahren hergestellt werden, das auch für ähnliche Produkte mit niedrigem Hafniumgehalt verwendet werden kann. Dieses Verfahren zur Herstellung eines hochtemperaturfesten, mehrphasigen keramischen Formkörpers aus Siliziumnitrid und Hafniumoxid ist dadurch gekennzeichnet, daß man eine pulverförmige Mischung aus 25 bis 85 Gew.-% $\alpha$-Siliziumnitrid, 11 bis 70 Gew.-% monoklinem Hafniumoxid und 5 bis 20 Gew.-% mindestens eines Oxids der Gruppe Magnesium, Yttrium, der seltenen Erden (von Sm bis Yb), oder eine äquivalente Menge eines Vorläufers dieses Oxids herstellt, diese Mischung zu einem Körper formt und diesen in Stickstoffatmosphäre bei 1 700 bis 2 000°C zu einer dichten Keramik sintert. Die Anteile der eingesetzten Oxide (und von Si$_3$N$_4$) entsprechen denen des resultierenden Keramikkörpers

Zusätzlich zu den genannten Sinteradditiven kann man noch 0 - 4 Gew.-% Al$_2$O$_3$ oder AlN (bezogen auf den ganzen Ansatz) zusetzen.

Anstelle von analysenreinem Hafniumoxid kann auch technisches Hafniumoxid eingesetzt werden, das durch geringe Mengen an Zirkonoxid verunreinigt ist.

Als Oxidvorläufer für die Oxide von Magnesium, Yttrium und/oder den Seltenen Erden können Verbindungen eingesetzt werden, die sich unter den Sinterbedingungen (oder bereits vorher) in die Oxide umwandeln. Hierzu zählen z. B. die Hydroxide, Nitrate, Nitrite, Acetate, Oxalate und Carbonate.

Die Vermischung der Komponenten kann in trockenem Zustand oder in Gegenwart eine flüssigen Phase, beispielsweise einem organischen Lösemittel wie Ethanol, Isopropanol oder Hexan durchgeführt werden.

Vorzugsweise werden Siliziumnitrid, Hafniumoxid und die Verbindungen der Sinterhilfselemente (einschließlich Aluminiumoxid oder Aluminiumnitrid) in einem Lösemittel dispergiert, gemischt und intensiv gemahlen. Anschließend wird die Pulversuspension getrocknet, z. B. in einem Sprühtrockner. Das erhaltene homogenisierte Pulvergemisch kann mittels Pressung oder nach Verdünnen mit einer flüssigen Phase durch Schlickerguß oder Spritzguß zu keramischen Grünkörpern geformt werden. Der Stickstoffdruck beim Sintern liegt üblicherweise bei 0,1 bis 10 MPa.

Die Erfindung wird durch die Beispiele näher erläutert.

## Beispiele

Es wurden Mischungen von Pulvern aus $\alpha$-Si$_3$N$_4$ (98 % $\alpha$-, 2 % $\beta$-Modifikation, mittlere Korngröße d$_{50}$ = 0,7 $\mu$m), Oxiden verschiedener Sinterhilfselemente sowie teilweise Aluminiumoxid (d$_{50}$ = 0,7 $\mu$m) hergestellt. Einwaag- und Mischungsverhältnisse gehen aus der Tabelle hervor. Diese Mischungen wurden in Ansätzen von 200 g in einer Attritormühle mit Mahlkugeln aus Aluminiumoxid und Isopropanol als Medium zwei Stunden intensiv gemischt und gemahlen. Die resultierende Mahlsuspension wurde mit einem 20 $\mu$m-Sieb abgetrennt und durch Abziehen des Isopropanols getrocknet. Das resultierende homogene Produkt wurde trocken durch ein Sieb mit 160 $\mu$m Maschenweite gesiebt und dann unter 300 MPa isostatisch zu Grünkörpern verpreßt. Die Grünkörper wurden anschließend zum Sintern in einer Stickstoffatmosphäre (Druck: 0,1 MPa) während einer Stunde auf 1800°C erhitzt, eine Stunde bei dieser Temperatur gehalten und dann während drei Stunden wieder auf Raumtemperatur abgekühlt.

Mittels Röntgenbeugung an den gesinterten Proben der Beispiele 1 - 5 wurde nachgewiesen, daß das $HfO_2$ in der kubischen Modifikation vorliegt. In den Proben der Beispiele 4 und 5 wurde außerdem kristalliner Apatit der allgemeinen Formel $A_{4+x}(SiO_4)_3 N_x$ mit x = etwa 1 und A = Ho bzw. Yb nachgewiesen. Die Festigkeitswerte der so erhaltenen mehrphasigen Siliziumnitrid-Keramik sind in der Tabelle zusammengefaßt.

Beispiele 6 und 7 sind Vergleichsbeispiele.

In sämtlichen Beispielen lag der Anteil an Glasphasen unter 10 Gew.-% (entsprechend unter 5 Vol.-%). Der Glasanteil betrug mindestens 0,5 Gew.-%. Die Glasphase bestand aus einem Oxynitrid-Glas. Das kristalline kubische $HfO_2$ lag als Mischkristall mit Y bzw. Seltenen Erden vor.

Aus den Beispielen ist zu erkennen, daß bei Ansätzen mit mehr als 10 Gew.-% $HfO_2$ die Biegebruchfestigkeit deutlich erhöht ist.

Tabelle

| Beispiel Nr. | Einwaage in Gew.-% | | | | | | Sinterdichte (g/cm3) | Biegebruchfestigkeit (MPa) bei | |
|---|---|---|---|---|---|---|---|---|---|
| | Si3N4 | HfO2 | Al2O3 | Y2O3 | Ho2O3 | Yb2O3 | | 25°C | 1 200°C |
| 1 | 68 | 20 | 2 | 10 | - | - | 3,81 | 820 | 424 |
| 2 | 63 | 25 | 2 | 10 | - | - | 3,96 | 831 | 430 |
| 3 | 58 | 30 | 2 | 10 | - | - | 4,16 | 795 | 416 |
| 4 | 60 | 20 | - | - | 20 | - | 4,22 | 811 | 453 |
| 5 | 65 | 20 | - | - | - | 15 | 4,11 | 826 | 456 |
| 6 (Vgl.) | 78 | 10 | 2 | 10 | - | - | 3,52 | 696 | 402 |
| 7 (Vgl.) | 88 | - | 2 | 10 | - | - | 3,27 | 622 | 365 |

**Patentansprüche**

1. Hochtemperaturfeste, mehrphasige Keramik mit einem Anteil von 25 - 85 Gew.-% an kristallinem $\beta$-Siliziumnitrid und einer amorphen Glasphase, dadurch gekennzeichnet, daß die Keramik von 11 bis 70

5

Gew.-% kristallines kubisches $HfO_2$ enthält und die Glasphase neben Silizium mindestens eines der Elemente Magnesium, Yttrium und/oder der Seltenen Erden und gegebenenfalls Aluminium enthält.

2. Keramik gemäß Anspruch 1, dadurch gekennzeichnet, daß die Glasphase aus einem amorphen Oxynitridglas besteht, das Silizium und mindestens eines der Elemente Yttrium, Magnesium oder der Seltenen Erden von Sm-Yb und gegebenenfalls Aluminium enthält.

3. Keramik gemäß Anspruch 1 oder 2, dadurch gekennzeichnet, daß sie noch einen kristallinen Apatit der Formel $A_{4+x}(SiO_4)_3N_x$ enthält, wobei x = etwa 1 und A = Y oder ein Element der Seltenen Erden von Sm - Yb bedeutet.

4. Keramik gemäß Anspruch 1, dadurch gekennzeichnet, daß das kristalline kubische Hafniumoxid als Mischkristall mit mindestens einem Oxid der Elemente Mg, Y oder der Seltenen Erden von Sm-Yb vorliegt.

5. Verfahren zur Herstellung einer hochtemperaturfesten, mehrphasigen Siliziumnitrid-Keramik ausgehend von $Si_3N_4$ und $HfO_2$, dadurch gekennzeichnet, daß man eine Mischung aus 25 - 85 Gew.-% pulverförmigem $\alpha$-Siliziumnitrid, 11 bis 70 Gew.-% monoklinem $HfO_2$ oder einem Hafniumoxid-Vorläufer und 5 - 20 Gew.-% mindestens eines Oxids der Elemente Magnesium, Yttrium und/oder der Seltenen Erden (von Sm-Yb) oder äquivalenter Mengen entsprechender Oxidvorläufer herstellt, diese Mischung zu einem Körper formt und diesen in Stickstoff-Atmosphäre bei 1 700 bis 2 000 °C zu einer dichten Keramik sintert.

6. Verfahren nach Anspruch 5, dadurch gekennzeichnet, daß der Stickstoffdruck beim Sintern 0,1 bis 10 MPa beträgt.

7. Verfahren nach Anspruch 5, dadurch gekennzeichnet, daß die Mischung als zusätzliches Sinteradditiv 0 - 4 Gew.-% $Al_2O_3$ - oder AlN enthält.

## Claims

1. A multi-phase ceramic which is resistant to high temperatures and contains 25 - 85 % by weight of crystalline $\beta$-silicon nitride and an amorphous glass phase, characterized in that the ceramic contains 11 to 70 % by weight of crystalline cubic $HfO_2$ end the glass phase contains, in addition to silicon, at least one of the elements magnesium, yttrium and/or the rare earths and, should the occasion arise, aluminium.

2. A ceramic as claimed in claim 1, characterized in that the glass phase consists of an amorphous oxynitride glass which contains silicon and at least one of the elements yttrium, magnesium or the rare earths from Sm to Yb .

3. A ceramic as claimed in claim 1 or 2, characterized in that it also contains a crystalline apatite of the formula $A_{4+x}(SiO_4)_3N_x$, in which x is about 1 end A is Y or an element of the rare earths from Sm to Yb.

4. A ceramic as claimed in claim 1, characterized in that the crystalline cubic hafnium oxide is present as a mixed crystal with at least one oxide of the elements Mg, Y or the rare earths from Sm to Yb.

5. A process for the preparation of a multi-phase silicon nitride ceramic which is resistant to high temperatures starting from $Si_3N_4$ and $HfO_2$, characterized in that comprises preparing a mixture of 25 - 85 % by weight of pulverulent $\alpha$-silicon nitride, 11 to 70 % by weight of monoclinic $HfO_2$ or a hafnium oxide precursor and 5 - 20 % by weight of at least one oxide of the elements magnesium, yttrium and/or the rare earths (from Sm to Yb), or equivalent amounts of corresponding oxide precursors, shaping this mixture to a body and sintering this body in a nitrogen atmosphere at 1,700 to 2,000 ° C to give a dense ceramic.

6. The process as claimed in claim 5, characterized in that the nitrogen pressure during sintering is 0.1 to 10 MPa.

**7.** The process as claimed in claim 5, characterized in that the mixture contains 0 - 4 % by weight of $Al_2O_3$ or AlN as an additional sintering additive.

## Revendications

**1.** Céramique polyphasique résistant aux hautes températures, contenant de 25 à 85 % en poids de nitrure de silicium $\beta$-cristallin et une phase vitreuse amorphe, caractérisée en ce que la céramique contient de 11 à 70 % en poids de $HfO_2$ cubique cristallin, la phase vitreuse contenant, outre le silicium, au moins l'un des éléments magnésium et yttrium et/ou l'un des éléments des terres rares et éventuellement de l'aluminium.

**2.** Céramique selon la revendication 1, caractérisée en ce que la phase vitreuse est constituée d'un verre d'oxynitrure amorphe, qui contient du silicium et au moins l'un des éléments yttrium ou magnésium ou l'un des éléments des terres rares Sm-Yb et éventuellement de l'aluminium.

**3.** Céramique selon les revendications 1 ou 2, caractérisée en ce qu'elle contient encore une apatite cristalline de formule $A_{4+x}(SiO_4)_3N_x$ où x vaut environ 1 et A est Y ou un élément des terres rares Sm-Yb.

**4.** Céramique selon la revendication 1, caractérisée en ce que l'oxyde de hafnium cubique cristallin est présent sous forme d'une solution solide comportant au moins un oxyde des éléments Mg ou Y ou des éléments des terres rares Sm-Yb.

**5.** Procédé pour préparer une céramique au nitrure de silicium polyphasique résistant aux hautes températures à partir de $Si_3N_4$ et de $HfO_2$, caractérisé en ce qu'on prépare un mélange de 25 à 85 % en poids de nitrure de silicium a en poudre, de 11 à 70 % en poids de $HfO_2$ monoclinique ou d'un précurseur d'oxyde de hafnium, et de 5 à 20 % en poids d'au moins un oxyde des éléments magnésium ou yttrium et/ou des éléments des terres rares (Sm-Yb) ou de quantités équivalentes de précurseurs d'oxydes correspondants, on façonne ce mélange pour obtenir un corps, puis on fritte ce dernier dans une atmosphère d'azote à une température de 1700 à 2000°C pour obtenir une céramique comprimée.

**6.** Procédé selon la revendication 5, caractérisé en ce que la pression de l'azote est de 0,1 à 10 MPa lors du frittage.

**7.** Procédé selon la revendication 5, caractérisé en ce que le mélange contient en tant qu'additif de frittage supplémentaire 0-4 % en poids de $Al_2O_3$ ou d'AlN.